# EUROPEAN PATENT SPECIFICATION

(11) **EP 2 177 427 B1**
(45) Date of publication and mention of the grant of the patent: **23.04.2014**
(21) Application number: 08105611.1
(22) Date of filing: 20.10.2008
(51) Int. Cl.: B62M 3/08

(54) **Quick release device for a pedal**
Vorrichtung zum schnellen Lösen eines Pedals
Dispositif à libération rapide pour une pédale

(43) Date of publication of application: 21.04.2010
(73) Proprietor: Chen, Chung-I, 43713 Taichung Hsien (TW)
(72) Inventor: Chen, Chung-I, 43713 Taichung Hsien (TW)
(74) Representative: Chaillot, Geneviève

(56) References cited:
- DE-A1- 19 904 114
- US-A- 5 586 472
- US-A1- 2003 205 103

## Description

### 1. Field of the Invention

The present invention relates to a quick release device, and more particularly to a quick release device for a pedal according to preamble part of claim 1. Such a quick release device is known from US 5,586,472.

### 2. Description of Related Art

Bicycle pedals are typically connected to the crank by screw bolts and nuts. This connecting method does not permit the rider to quickly and easily detach the pedal from the crank. A conventional quick release device in accordance with the prior art comprises a fixing threaded sleeve screwed on the rotation shaft of the pedal and a crank arm formed with locking recess for locking and fixing the fixing threaded sleeve. The crank arm of the conventional quick release device is needed to machine the locking recess, and therefore the conventional quick release device does not fit all the crank arms on the market. Moreover, the connection between the crank arm and the threaded sleeve will loosen after the long time riding. That is dangerous for rider when the pedal is detached from the crank arm.

US 5,586,472 discloses a detachable bicycle pedal mounting structure having a spindle and a connecter which has one end connected to the spindle and the other end connected to a crank. The spindle has a locating hole defined therein. The connector has a stepped hole defined thereon. A lock means includes a locating bolt mounted in the stepped hole and tightly received in the locating hole for locking the spindle within the connector and preventing rotation of the spindle relative to the connector and the crank.

DE 199 04 114 A1, more specifically the embodiment shown in Fig. 8a of this reference discloses a connecting device having a spindle which has an annular groove defined in an outer periphery thereof. A shoe sole is connected to the spindle. The shoe sole has a receiving hole defined therein for partially receiving the spindle. The shoe sole has a guiding hole laterally defined therein and communicating with the receiving hole. A quick release device is received in the guiding hole. The quick release device comprises a rod and a spring biased against the rod toward the receiving hole.

It is the object of the present invention to provide an improved quick release device.

This object is achieved by the subject matter of the independent claim.

Preferred embodiments of the invention are the subject matters of the dependent claims.

In the drawings:
Fig. 1 is an exploded perspective view of a quick release device for a pedal in accordance with the present invention;
Fig. 2 is an assembled perspective view of the quick release device in Fig. 1;
Fig. 3 is a cross-sectional view of the quick release device taken along line A-A in Fig. 2; and
Fig. 4 is an operational cross-sectional view of the quick release device in accordance with the present invention, showing the spindle is detached from the connecting unit.

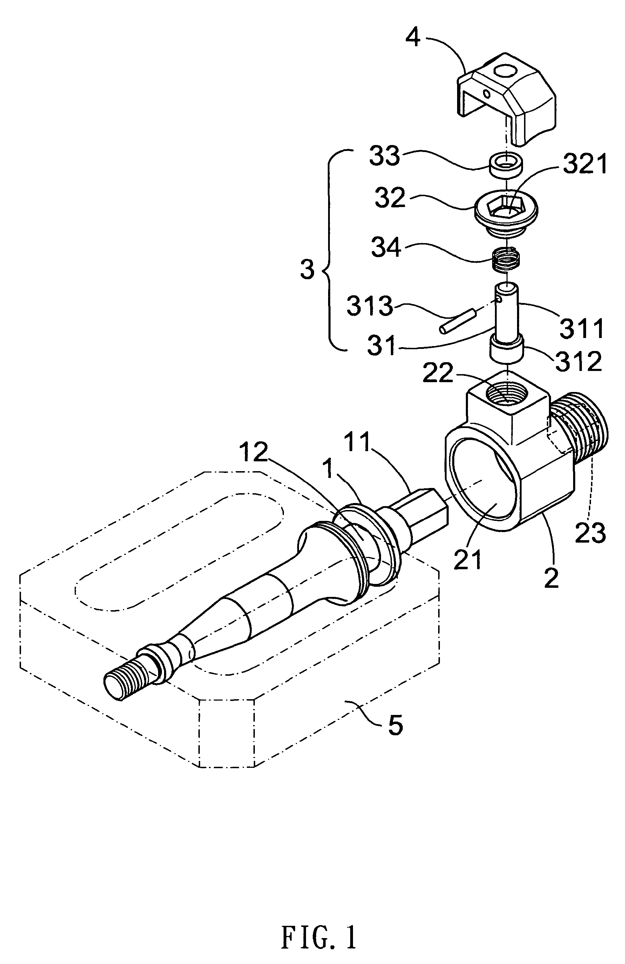

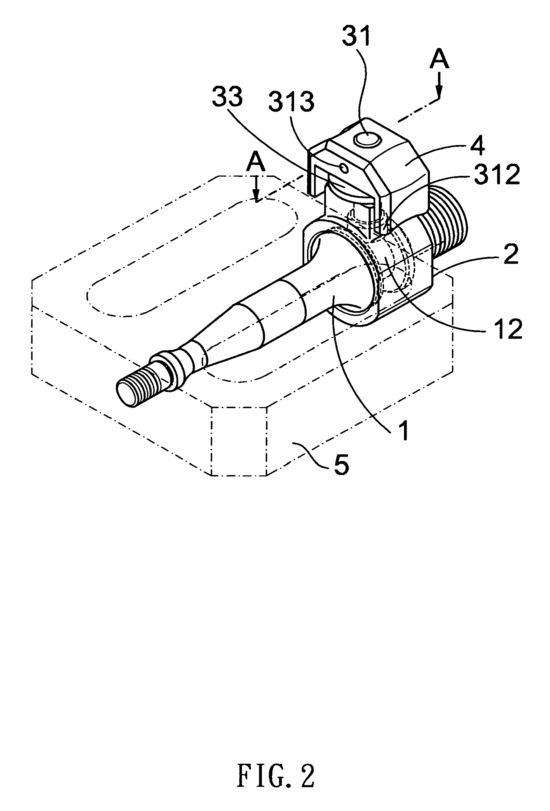

Referring to the drawings and initially to Figs. 1-2, a quick release device for a pedal in accordance with the present invention comprises a spindle 1, a connecting unit 2 connected to the spindle 1, a quick release mechanism 3 partially received in the connecting unit 2, and a housing 4 connected to the quick release mechanism 3.

One end of the spindle 1 is formed with a threaded portion (not numbered) for adapting to be mounted to a pedal 5. The spindle 1 has a protrusion 11 coaxially extending from the other end thereof. The protrusion 11 is in a shaped of polygon for assembling with the connecting unit 2. The spindle 1 has an annular groove 12 defined in an outer peripheral thereof and being adjacent to the protrusion 11.

The connecting unit 2 has a receiving hole 21 defined therein for partially receiving the spindle 1. The connecting unit 2 has a guiding hole 22 defined in a lateral thereof and communicated with the receiving hole 21 for partially receiving the quick release mechanism 3. The guiding hole 22 is perpendicular to the receiving hole 21 and corresponds to the annular groove 12 in the spindle 1 when in assembly. The connecting unit 2 has a retaining hole 23 defined therein and communicated with the receiving hole 21. The retaining hole 23 is coaxial with the receiving hole 21. The retaining hole 23 is complementary to the protrusion 11 for engaging with the protrusion 11. One end of the connecting unit 2 which is opposite to the receiving hole 21 is formed with a threaded portion (not numbered) for adapting to be mounted to a crank.

The quick release mechanism 3 comprises a rod 31 received in the guiding hole 22, a spring 34 connected to the rod 31, a fastener 32 screwed to the guiding hole 22. The rod 31 has a shank portion 311 formed therein and a head portion 312 extended from one end thereof. A diameter of the head portion 312 is greater than that of the shank portion 311. The spring 34 is sleeved on the shank portion 311. One end of the spring 34 is fixed to the fastener 32 and the other end of the spring 34 is abutted to the head portion 312 such that biasing against the rod 31 toward the receiving hole 21. The diameter of the head portion 312 is substantially equal to a width of the annular groove 12 for securely engaging the head portion 312 with the annular groove 12. The fastener 32 has a through hole 321 defined therein for passing the shank portion 311. The fastener 32 has a polygon hole (not numbered) defined therein and coaxially communicated with through hole 321. The polygon hole is provided to be inserted by a tool for screwing the fastener 32. The quick release mechanism 3 further comprises a ring 33 received in the polygon hole. The ring 33 is made of soft materials and is lubricated. The ring 33 is sleeved on the shank portion 311 for lubricating and guiding. The housing 4 covers the quick release mechanism 3 for keeping the quick release mechanism 3 from dust and water. The quick release mechanism 3 further comprises a pin 313 passing through the housing 4 and the shank potion 311 such that the rod 31 moves with the housing 4 along an axis of the guiding hole 22 when pulling the housing 4.

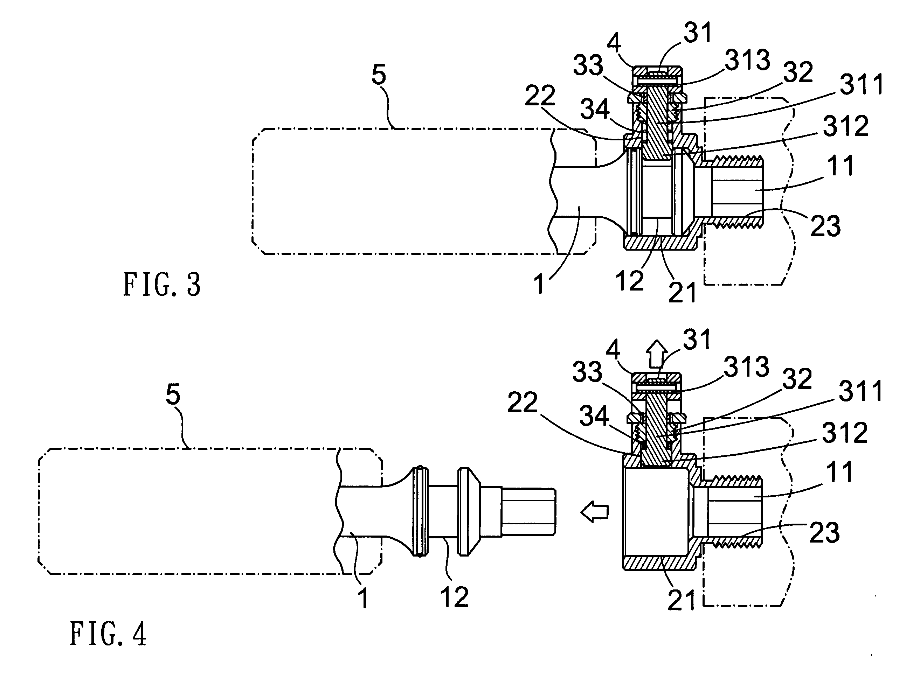

Referring to Fig. 3, in assembly, the spindle 1 is inserted into the receiving hole 21. The protrusion 11 engages with the retaining hole 23 such that the spindle 1 does not rotate relative to the connecting unit 2. In the meantime, the head portion 312 of the rod 31 engages with the annular groove 12 in the spindle 1, therefore the spindle 1 is firmly secured with the connecting unit 2. The rod 31 is subjected to a spring force to keep engaging with the annular groove 12. Furthermore, the annular groove 12 is provided to engage with the rod 31 at any angle to enhance flexibility.

Referring to Fig. 4, when pulling the housing 4, the rod 31 moves with the housing 4. In the meantime, the head portion 312 disengages with the annular groove 12. The spindle 1 together with the pedal 5 is free to be detached from the connecting unit 2. After the spindle 1 is released, the rod 31 is automatically and downwardly restored by a biasing force of the spring 34.

## Claims

1. A quick release device for a pedal comprising a spindle (1) having a protrusion (11) extending from one end thereof, a connecting unit (2) connected to the spindle (1) and a quick release mechanism (3) connected to the connecting unit (2); the connecting unit (2) having a guiding hole (22); the connecting unit (2) having a receiving hole (21) defined therein for partially receiving the spindle (1), the guiding hole (22) defined in a lateral portion of the connecting unit (2) and communicated with the receiving hole (21); the quick release mechanism (3) comprising a rod (31) partially received in the guiding hole (22), the rod (31) having a shank portion (311) and an enlarged head portion (312) extending from one end thereof, a diameter of the head portion (312) being greater than that of the shank portion (311); a spring (34) sleeved on the shank portion (311) of the rod (31) and biased against the rod (31) toward the receiving hole (21)
**characterized in that**:
an annular groove (12) is defined in an outer periphery of the spindle (1); the connecting unit (2) having a retaining hole (23) defined therein; the retaining hole (23) communicated with the receiving hole (21); the diameter of the head portion (312) being substantially equal to a width of the annular groove (12) for securely engaging the head portion (312) with the annular groove (12);
whereby in assembly the protrusion (11) engages with the retaining hole (23) and the rod (31) engages with the annular groove (12) at any angle to enhance flexibility.

2. The quick release device for a pedal as claimed in claim 1, wherein the quick release mechanism (3) further comprises a fastener (32) screwed to the guiding hole (22), the fastener (32) having a through hole (321) defined therein for passing the shank portion (311), one end of the spring (34) fixed to the fastener (321) and the other end of the spring (34) abutted to the head portion (312) of the rod (31) in order to bias against the rod (31) toward the receiving hole (21).

3. The quick release device for a pedal as claimed in one of claims 1 to 2 further comprising a housing (4) connected to the rod (31) and a pin (313) passing through the housing (4) and the rod (31), wherein when pulling the housing (4), the rod (31) moves with the housing (4) along the guiding hole (22); when releasing the housing (4), the rod (31) is downwardly restored by a biasing force of the spring (34).

4. The quick release device for a pedal as claimed in one of claims 1 to 3, wherein the quick release mechanism (3) further comprises a ring (33) sleeved on the rod (31), wherein the ring (33) is made of soft materials and lubricated.

5. The quick release device for a pedal as claimed in one of claims 1 to 4, wherein the spindle (31) has a threaded portion formed in one end thereof for adapting to be mounted to the pedal (5).

6. The quick release device for a pedal as claimed in one of claims 1 to 5, wherein the connecting unit (2) has a threaded portion formed in one end thereof for adapting to be mounted to a crank.

7. The quick release device for a pedal as claimed in one of claims 1 to 6, wherein the protrusion (11) is in a shaped of polygon and the retaining hole (23) is complementary to the protrusion (11) for engaging with the protrusion (11).

## Patentansprüche

1. Vorrichtung zum schnellen Lösen eines Pedals, umfassend eine Achse (1) mit einem Vorsprung (11), der von einem Ende davon aus verläuft, eine Verbindungseinheit (2), die mit der Achse (1) verbunden ist, und einen Schnelllösemechanismus (3), der mit der Verbindungseinheit (2) verbunden ist; wobei die Verbindungseinheit (2) eine Führungsbohrung (22) aufweist; die Verbindungseinheit (2) eine darin definierte Aufnahmebohrung (21) zum teilweisen Aufnehmen der Achse (1) aufweist, die Führungsbohrung (22) in einem seitlichen Abschnitt der Verbindungseinheit (2) definiert ist und mit der Aufnahmebohrung (21) in Verbindung steht; der Schnelllösemechanismus (3) eine Stange (31) umfasst, die teilweise in der Führungsbohrung (22) aufgenommen ist, die Stange (31) einen Schaftabschnitt (311) und einen vergrößerten Kopfabschnitt (312), der sich von einem Ende davon aus erstreckt, aufweist, ein Durchmesser des Kopfabschnitts (312) größer als der des Schaftabschnitts (311) ist; eine Feder (34) über den Schaftabschnitt (311) der Stange (31) geschoben ist und gegen die Stange (31) in Richtung der Aufnahmebohrung (21) vorgespannt ist
**dadurch gekennzeichnet, dass**:
eine Ringnut (12) in einem Außenumfang der Achse (1) definiert ist; die Verbindungseinheit (2) eine darin definierte Haltebohrung (23) aufweist; die Haltebohrung (23) mit der Aufnahmebohrung (21) in Verbindung steht; der Durchmesser des Kopfabschnitts (312) für den sicheren Eingriff des Kopfabschnitts (312) in die Ringnut (12) im Wesentlichen einer Breite der Ringnut (12) entspricht;
wodurch beim Zusammenbau der Vorsprung (11) in die Haltebohrung (23) eingreift und die Stange (31) zur Erhöhung der Flexibilität unter jedem beliebigen Winkel in die Ringnut (12) eingreift.

2. Vorrichtung zum schnellen Lösen eines Pedals nach Anspruch 1, wobei der Schnelllösemechanismus (3) ferner ein Befestigungselement (32) umfasst, das an die Führungsbohrung (22) geschraubt ist, das Befestigungselement (32) eine darin definierte Durchgangsbohrung (321) zum Durchführen des Schaftabschnitts (311) aufweist, ein Ende der Feder (34) an dem Befestigungselement (321) befestigt ist und das andere Ende der Feder (34) an dem Kopfabschnitt (312) der Stange (31) anstößt, um gegen die Stange (31) in Richtung der Aufnahmebohrung (21) vorzuspannen.

3. Vorrichtung zum schnellen Lösen eines Pedals nach einem der Ansprüche 1 und 2, ferner umfassend ein Gehäuse (4), das mit der Stange (31) verbunden ist, und einen Stift (313), der durch das Gehäuse (4) und die Stange (31) verläuft, wobei sich beim Ziehen des Gehäuses (4) die Stange (31) mit dem Gehäuse (4) entlang der Führungsbohrung (22) bewegt; beim Loslassen des Gehäuses (4) die Stange (31) durch eine Vorspannkraft der Feder (34) nach unten zurückgeführt wird.

4. Vorrichtung zum schnellen Lösen eines Pedals nach einem der Ansprüche 1 bis 3, wobei der Schnelllösemechanismus (3) ferner einen Ring (33) umfasst, der über die Stange (31) geschoben ist, wobei der Ring (33) aus weichen Werkstoffen hergestellt und geschmiert ist.

5. Vorrichtung zum schnellen Lösen eines Pedals nach einem der Ansprüche 1 bis 4, wobei die Achse (31) einen an einem Ende davon geformten Gewindeabschnitt zur Anpassung an die Montage an das Pedal (5) aufweist.

6. Vorrichtung zum schnellen Lösen eines Pedals nach einem der Ansprüche 1 bis 5, wobei die Verbindungseinheit (2) einen an einem Ende davon geformten Gewindeabschnitt zur Anpassung an die Montage an eine Kurbel aufweist.

7. Vorrichtung zum schnellen Lösen eines Pedals nach einem der Ansprüche 1 bis 6, wobei der Vorsprung (11) als Vieleck geformt ist und die Haltebohrung (23) für den Eingriff mit dem Vorsprung (11) auf den Vorsprung (11) abgestimmt ist.

## Revendications

1. Dispositif à libération rapide pour une pédale comprenant un axe (1) ayant une saillie (11) s'étendant à partir d'une extrémité de celle-ci, une unité de liaison (2) reliée à l'axe (1) et un mécanisme à libération rapide (3) relié à l'unité de liaison (2) ; l'unité de liaison (2) ayant un trou de guidage (22) ; l'unité de liaison (2) ayant un trou de réception (21) défini dans celle-ci pour recevoir partiellement l'axe (1), le trou de guidage (22) étant défini dans une partie latérale de l'unité de liaison (2) et communiquant avec le trou de réception (21) ; le mécanisme à libération rapide (3) comprenant une tige (31) reçue partiellement dans le trou de guidage (22), la tige (31) ayant une partie tige (311) et une partie tête agrandie (312) s'étendant à partir d'une extrémité de celle-ci, un diamètre de la partie tête (312) étant supérieur à celui de la partie tige (311) ; un ressort (34) étant enfilé sur la partie tige (311) de la tige (31) et sollicité contre la tige (31) en direction du trou de réception (21),
**caractérisé par le fait que** :
une gorge annulaire (12) est définie dans une périphérie externe de l'axe (1) ; l'unité de liaison ayant un trou de retenue (23) défini dans celle-ci ; le trou de retenue (23) communiquant avec le trou de réception (21) ; le diamètre de la partie tête (312) étant sensiblement égal à une largeur de la gorge annulaire (12) pour engager de façon sûre la partie tête (312) avec la gorge annulaire (12) ; ce par quoi en assemblage la saillie (11) s'engage avec le trou de retenue (23) et la tige (31) s'engage avec la gorge annulaire (12) selon n'importe quel angle pour augmenter la flexibilité.

2. Dispositif à libération rapide pour une pédale, selon la revendication 1, dans lequel le mécanisme à libération rapide (3) comprend en outre un organe de fixation (32) vissé dans trou de guidage (22), l'organe de fixation (32) ayant un trou traversant (321) défini dans celui-ci pour le pasasge de la partie tige (311), une extrémité du ressort (34) étant fixée à l'organe de fixation (321) et l'autre extrémité du ressort (34) venant en butée sur la partie tête (312) de la tige (31) afin de solliciter la tige (31) en direction du trou de réception (21).

3. Dispositif à libération rapide pour une pédale, selon l'une des revendications 1 et 2, comprenant en outre un boîtier (4) relié à la tige (31) et une broche (313) passant à travers le boîtier (4) et la tige (31), dans lequel, lorsque l'on tire le boîtier (4), la tige (31) se déplace avec le boîtier (4) le long du trou de guidage (22) ; lorsque l'on libère le boîtier (4), la tige (31) est ramenée vers le bas par une force de sollicitation du ressort (34).

4. Dispositif à libération rapide pour une pédale, selon l'une des revendications 1 à 3, dans lequel le mécanisme à libération rapide (3) comprend en outre une bague (33) enfilée sur la tige (31), la bague (33) étant faite de matériaux souples et lubrifiée.

5. Dispositif à libération rapide pour une pédale, selon l'une des revendications 1 à 4, dans lequel l'axe (31) a une partie filetée formée dans une extrémité de celui-ci pour être apte à être monté sur la pédale (5).

6. Dispositif à libération rapide pour une pédale, selon l'une des revendications 1 à 5, dans lequel l'unité de raccord (2) a une partie filetée formée dans une extrémité de celle-ci por être apte à être montée sur une manivelle.

7. Dispositif à libération rapide pour une pédale, selon l'une des revendications 1 à 6, dans lequel la saillie (11) se présente sous une forme de polygone et le trou de retenue (23) est complémentaire de la saillie (11) pour s'engager avec la saillie (11).
